# NEUE EUROPÄISCHE PATENTSCHRIFT

(11) **EP 1 386 687 B2**
(45) Veröffentlichungstag und Bekanntmachung des Hinweises auf die Entscheidung über den Einspruch: **25.02.2015**
(45) Hinweis auf die Patenterteilung: 02.01.2008
(21) Anmeldenummer: 03003199.1
(22) Anmeldetag: 20.02.2003
(51) Int. Cl.: B23K 9/04, B23K 10/02, B23P 15/10, F02F 3/00, F16J 1/00

(54) **Verfahren zur Herstellung eines Kolbens sowie Kolben**
Process for making a piston and piston
Piston et sa méthode de fabrication

(30) Priorität: 30.07.2002 DE 10234669
(43) Veröffentlichungstag der Anmeldung: 04.02.2004
(73) Patentinhaber: Federal-Mogul Nürnberg GmbH, 90441 Nürnberg (DE)
(72) Erfinder: Reichstein, Simon, 90411 Nürnberg (DE); Hofmann, Lothar, 92318 Neumarkt (DE); Heigl, Reiner, 71686 Remseck (DE); Claus, Jürgen, 71384 Weinstadt (DE)
(74) Vertreter: Hoffmann Eitle

(56) Entgegenhaltungen:
- EP-A- 0 820 831
- CH-A- 659 300
- DE-A- 3 246 630
- DE-A- 19 902 864
- US-A- 4 157 923
- US-A- 4 562 327
- PATENT ABSTRACTS OF JAPAN vol. 1998, no. 03, 27. Februar 1998 (1998-02-27) & JP 09 295173 A (NISSAN MOTOR CO LTD), 18. November 1997 (1997-11-18)

## Beschreibung

### Technisches Gebiet

Die Erfindung betrifft ein Verfahren zur Herstellung eines Kolbens sowie einen mittels des Verfahrens hergestellten Kolben nach dem Oberbegriff des Anspruchs 1 bzw. 7.

Die Kolben von Verbrennungsmotoren sind während des Betriebes hohen thermischen Belastungen ausgesetzt. Darüber hinaus sind sie fortlaufend Veränderungen der Betriebsbedingungen, insbesondere im Hinblick auf die Temperaturen, unterworfen. Beispielsweise führen sowohl Start- als auch Abschaltvorgänge ebenso wie Wechsel der Drehzahl oder der Leistung des Motors zu gravierenden Veränderungen der Temperaturverteilung in dem Kolben. Derartige Veränderungen der lokal auftretenden Temperaturen haben innere Spannungen zur Folge. Diese können zu einer plastischen Verformung und schlimmstenfalls zu einem Versagen des Kolbens führen. Insbesondere an denjenigen Stellen, die üblicherweise hohen Temperaturen ausgesetzt sind, ist es von großer Bedeutung, eine gute Beständigkeit des Kolbenwerkstoffs gegen thermomechanische Ermüdung zu erreichen.

### Stand der Technik

Aus der GB 1 373 987 gehen ein Verfahren nach dem Oberbegriff des Anspruchs 1 sowie ein Kolben nach dem Oberbegriff des Anspruchs 7 hervor, bei dem bestimmte Bereiche eines Leichtmetallkolbens einer Bearbeitung durch Umschmelzen unterworfen werden.

Ein ähnliches Verfahren ergibt sich aus der DE 80 28 685 U1, gemäß der eine Umschmelzbehandlung nur in bestimmten Bereichen vorgenommen wird, um das Verhalten des Kolbens unter bestimmten Spannungen zu beeinflussen.

Aus der EP 0 077 349 B1 ist es bekannt, die Festigkeit eines Aluminiumkolbens in besonders belasteten Bereichen durch eine Legierungsbehandlung mit Laser- oder Elektronenstrahl oder alternativ durch Dispersionshärten zu erhöhen.

Die DE 199 02 864 A1 betrifft einen Kolben und ein Verfahren zu dessen Herstellung, bei dem der Grundwerkstoff des Kolbens am Muldenrand zur Erzeugung eines Schmelzbades erwärmt und ein Zusatzwerkstoff zugeführt wird. Hierbei können Laser- oder Elektronenstrahlen verwendet werden.

Aus der US 4,562,327 gehen ein Kolben und ein Verfahren zur Herstellung von gegen Abrieb widerstandsfähigen Oberflächen in den Ringnuten eines Kolbens hervor, bei dem eine Nut aufgeschmolzen, mit einem Füllmaterial gefüllt und nachfolgend bearbeitet wird.

Die US 4,157,923 betrifft das Legieren und Wärmebehandeln einer Oberfläche, bei dem einer Oberfläche eines Bauteils aus einer Aluminiumlegierung reines Aluminium hinzugefügt werden kann.

### Darstellung der Erfindung

Der Erfindung liegt die Aufgabe zugrunde, ein Verfahren zur Herstellung eines Kolbens sowie einen Kolben zu schaffen, durch die eine verbesserte Beständigkeit des Kolbens gegen thermische Ermüdung erzielt werden kann.

Die Lösung dieser Aufgabe erfolgt zum einen durch das im Anspruch 1 beschriebene Verfahren.

Demzufolge ist vorgesehen, den Kolben zumindest bereichsweise durch ein Lichtbogen-Schweißverfahren einer Schmelzbehandlung zu unterziehen, und nachfolgend mit einer Abkühlrate oder Geschwindigkeit von 100-1000 K/s abzukühlen. Es sei erwähnt, dass bei technischen Umschmelzprozessen Erstarrungsgeschwindigkeiten in einem äußerst umfangreichen Bereich, nämlich etwa zwischen 10³ und 10⁻¹⁰ K/s möglich sind. Innerhalb dieses umfangreichen Bereichs hat sich die erfindungsgemäße Abkühlrate von 100-1000 K/s überraschenderweise als besonders günstig herausgestellt. Bei Versuchen hat sich ergeben, dass hierdurch die folgenden Vorteile erreicht werden. Durch das Umschmelzen wird zumindest bereichsweise die Mikrostruktur verändert. Insbesondere entsteht aus dem vergleichsweise groben Gussgefüge ein Werkstoff mit einer wesentlich feineren Mikrostruktur. Dieser Werkstoff ist bei gleicher Zusammensetzung und weitgehend gleichbleibender Festigkeit erheblich beständiger gegen die Einleitung von thermomechanisch bedingten Rissen als der gegossene Werkstoff. Insbesondere können bei dem erfindungsgemäß hergestellten Kolben in den aufgeschmolzenen und nachfolgend abgekühlten Bereichen Partikel festgestellt werden, die kleiner, zumeist deutlich kleiner als 10⁻⁶ m sind. Für Partikel mit einer derartigen Größe hat sich ergeben, dass sie zu der erwünschten Dispersionshärtung und damit zu einer deutlichen Verbesserung der Hochtemperaturfestigkeit führen.

Die erfindungsgemäße Abkühlrate von 100-1000 K/s wurde wie folgt ermittelt. Es wurde festgestellt, dass, je höher die Abkühlrate ist, desto feiner die Partikel in der Schmelze kristallisieren. Durch Versuche wurde herausgearbeitet, dass die Abkühlrate mindestens 100 K/s betragen muss, damit ein ausreichender Anteil des primären Siliziums, das bevorzugt in dem herzustellenden Kolben vorhanden ist, ausreichend fein ausgebildet wird, so dass es zu einer Dispersionshärtung des Werkstoffs kommt. Eine langsamere Erstarrung würde zu einem gröberen Gefüge führen, das die erwünschten Eigenschaften nicht aufweist. Somit kann als eine Mindest-Abkühlrate 100 K/s angegeben werden.

Im Hinblick auf die Obergrenze der Abkühlrate hat sich durch geeignete Versuche ein Wert von 1000 K/s ergeben. Bei einem noch schnelleren Abkühlen würde es zu einer Zwangslösung des Siliziums in einem übersättigten Aluminium- Mischkristall kommen. Hierdurch würden die erwünschten, feinen Dispersoide verloren gehen. Diese sind für die angestrebte Dispersionshärtung und Hochtemperaturfestigkeit erforderlich.

Darüber hinaus ist es äußerst aufwendig, diejenigen Volumina, die bei der Herstellung des erfindungsgemäßen Kolbens aufgeschmolzen werden, schneller abzukühlen als mit der erfindungsgemäßen Abkühlrate von 1000 K/s. Insgesamt ergibt sich durch das erfindungsgemäße Verfahren ein wirtschaftlich sinnvolles Herstellungsverfahren für Kolben, mit dem ein Kolben mit einer zumindest bereichsweise verbesserten Hochtemperaturfestigkeit hergestellt werden kann.

Im Rahmen der Erfindung wird der Muldenrand eines mit einer Brennraummulde versehenen Kolbens aufgeschmolzen. Zusätzlich können im Rahmen der Erfindung jegliche Bereiche eines Kolbens bearbeitet werden, für die besonders hohe thermische Belastungen und Veränderungen der Temperaturverteilung zu erwarten sind.

Durch das erfindungsgemäße Verfahren wird im Rahmen seiner Herstellung ein Kolben bearbeitet, der aus einer Legierung besteht. Die Legierung weist ein Hauptlegierungselement und zumindest ein Legierungselement auf. Ferner wurde im Rahmen der Erfindung erkannt, dass die Beständigkeit gegen thermische Ermüdung durch Einbringen des Hauptlegierungselements verbessert werden kann. In diesem Punkt unterscheidet sich diese Ausführungsform erheblich von den bislang gewählten Ansätzen. Hierbei wurden stets festigkeitserhöhende Elemente, wie z.B. Silizium, Nickel, Kupfer oder Magnesium, eingebracht. Derartige Legierungselemente erhöhen beispielsweise bei einem Kolben aus einer Aluminiumlegierung lokal die Festigkeit. Es wurde stets angenommen, dass hierdurch auch die Eigenschaften im Hinblick auf die Temperaturwechselbeständigkeit verbessert werden können.

Im Rahmen der Erfindung hat sich jedoch überraschend herausgestellt, dass nicht eine Erhöhung, sondern eine Verringerung der Konzentration dieser festigkeitserhöhenden Elemente vorteilhaft ist. Es kommt also zu einer "Verdünnung" der Legierung. Diese Maßnahme kann auch als Ablegieren bezeichnet werden. Dies wird dadurch erreicht, dass zumindest in geringem Umfang das Hauptlegierungselement eingebracht wird, so dass sich die Konzentration der Legierungselemente in den behandelten Bereichen verringert, zumindest jedoch nicht erhöht. Versuche haben gezeigt, dass dies zwar zu einer geringfügigen Erniedrigung der Festigkeit führen kann. Es ergibt sich jedoch auch eine verbesserte Beständigkeit gegen thermomechanische Ermüdung. Insbesondere dadurch, dass das erfindungsgemäße Verfahren lediglich in den thermisch besonders belasteten Bereichen angewendet wird, ergibt sich ein Kolben, der insgesamt eine nur geringfügig beeinträchtigte Festigkeit aufweist. An den besonders gefährdeten Stellen ist die thermische Belastbarkeit jedoch erhöht, so dass sich insgesamt eine deutlich verbesserte Lebensdauer des Kolbens ergibt.

Der erfindungsgemäße Effekt lässt sich dadurch erreichen, dass das Hauptlegierungselement in Reinform als Zusatzwerkstoff eingebracht wird. Der gleiche Effekt kann jedoch erzeugt werden, indem eine Legierung eingebracht wird, die das Hauptlegierungselement sowie zumindest ein Legierungselement der Kolbenlegierung enthält, welches jedoch in dem Zusatzwerkstoff in einer niedrigeren Konzentration vorliegt als in dem zu behandelnden Kolben. Auch hierdurch wird bereichsweise die Konzentration des Legierungselements verringert und die thermische Beständigkeit des Kolbens zumindest in diesem Bereich erhöht. Zu der zuletzt beschriebenen Ausführungsform des erfindungsgemäßen Verfahrens, bei dem im Rahmen des Aufschmelzens mittels eines Schweißverfahrens das Hauptlegierungselement als Zusatzwerkstoff eingebracht wird, ist zu betonen, dass dieser Verfahrensschritt grundsätzlich von übrigen Merkmalen der Erfindung, insbesondere der angegebenen Abkühlrate, unabhängig ist. Mit anderen Worten kann bei einem beliebigen Verfahren zur Herstellung eines Kolbens eine Verbesserung der Wärmebeständigkeit dadurch erfolgen, dass der Kolben mittels eines Schweißverfahrens zumindest bereichsweise aufgeschmolzen wird, und das Hauptlegierungselement als Zusatzwerkstoff eingebracht wird, sodass die Konzentration des Hauptlegierungselements somit zumindest bereichsweise erhöht wird. Bei einem derartigen Verfahren können alle übrigen, vorangehend und nachfolgend genannten Merkmale vorteilhaft eingesetzt werden. Dies gilt in gleicher Weise für den erfindungsgemäßen Kolben, der zumindest bereichsweise eine verglichen mit anderen Bereichen feinere Struktur und eine erhöhte Konzentration des Hauptlegierungselements aufweisen kann, ohne dass Partikel in derjenigen Größe vorhanden sind, die nachfolgend für den erfindungsgemäßen Kolben angegeben werden. Auch die Merkmale des erfindungsgemäßen Kolbens sind in hierin beschriebener Weise miteinander kombinierbar.

Bevorzugte Weiterbildungen des erfindungsgemäßen Verfahrens sind in den weiteren Ansprüchen beschrieben.

Für das zum Umschmelzen und/oder Einbringen des Zusatzwerkstoffs verwendete Schweißverfahren haben sich bei Versuchen gute Ergebnisse für Plasma- und MIG- (Metall-Inertgas) Schweißen ergeben. Im Rahmen der Erfindung wird insbesondere ein Plasmaschweißverfahren bevorzugt. Bei einem derartigen Verfahren kann das Umschmelzen des zu behandelnden Bereichs auch ohne Zugabe eines Zusatzwerkstoffs erfolgen.

Alternativ sind für diejenige bevorzugte Ausführungsform des erfindungsgemäßen Verfahrens gute Ergebnisse zu erwarten, bei der ein WIG-Schweißverfahren verwendet wird.

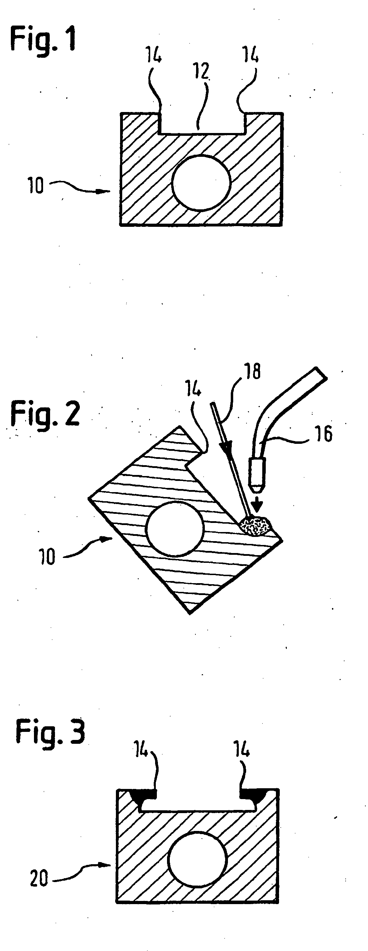

Für die Realisierung des erfindungsgemäßen Verfahrens hat es sich als besonders günstig herausgestellt, das Schweißverfahren mit mehr als einer Lage und/oder mehr als einer Bahn durchzuführen. Grundsätzlich steht man vor der Aufgabe, ein bestimmtes Volumen mittels eines Schweißverfahrens umzuschmelzen. Das Schweißverfahren kann auch einlagig oder in einer einzigen Bahn durchgeführt werden. Um das erforderliche umgeschmolzene Volumen zu realisieren, ist hier mehr Energie erforderlich als bei einem zwei- oder mehrlagigen oder zwei- oder mehrbahnigen Verfahren. Bei einem einlagigen Verfahren tritt deshalb eine vergleichsweise langsame Erstarrung ein. Die erfindungsgemäße, vergleichsweise hohe Abkühlrate oder Erstarrungsgeschwindigkeit lässt sich deshalb in vorteilhafter Weise, wie Versuche ergeben haben, durch ein Schweißverfahren mit mehr als einer Lage oder Bahn erreichen. Die sich hierbei einstellende Einschweißtiefe hat sich für die meisten Anwendungsfälle als ausreichend erwiesen. Ein Schweißverfahren mit mehr als einer Bahn ist so zu verstehen, dass mehr als eine Schweißbahn oder -naht nebeneinander ausgebildet werden. Um sicherzustellen, dass zwischen derartigen Bahnen kein Bereich verbleibt, der nicht umgeschmolzen wird, sind derartige Bahnen oder Nähte zumindest geringfügig zu überlappen, so dass sich zumeist automatisch mehr als eine Schweißlage einstellt. Im Übrigen wird unter einem Schweißverfahren mit mehr als einer Lage verstanden, dass mehr als eine Schweißung übereinander durchgeführt werden. Im Hinblick auf das nachfolgend noch genauer erläuterte Ausführungsbeispiel und die Zeichnungen sei erwähnt, dass der behandelte Muldenrand in dem Ausführungsbeispiel durch mehr als eine Schweißbahn behandelt wurde, die sich gemäß der Darstellung von Fig. 1 übereinander befinden. Bei einer Drehung des Kolbens um 90 Grad wären die Schweißbahnen jedoch nebeneinander, üblicherweise mit der beschriebenen Überlappung, ausgebildet, so dass von einem Schweißverfahren mit mehr als einer Bahn gesprochen werden kann.

Derzeit wird die Anwendung des erfindungsgemäßen Verfahrens auf Kolben aus Aluminiumlegierungen bevorzugt. Grundsätzlich ist es jedoch ebenso denkbar, dass ein Stahlkolben behandelt wird, bei dem sich in bestimmten Anwendungsfällen eine Erhöhung der thermischen Beständigkeit gegen das Einleiten von Rissen als vorteilhaft erweisen kann. Dementsprechend wird bei einem Kolben aus einer Aluminiumlegierung als Zusatzwerkstoff zumindest Aluminium und bei einem Stahlkolben zumindest Eisen eingebracht.

Im Hinblick auf die Menge des eingebrachten Zusatzwerkstoffs wird bevorzugt, dass der behandelte Bereich bis zu 50% aus dem Zusatzwerkstoff besteht.

Grundsätzlich können im Rahmen der Erfindung jegliche Bereiche eines Kolbens bearbeitet werden, für die besonders hohe thermische Belastungen und Veränderungen der Temperaturverteilung zu erwarten sind. Bevorzugt und als besonders vorteilhaft wird jedoch eine Bearbeitung des Muldenrandes eines mit einer Brennraummulde versehenen Kolbens angesehen.

Die Lösung der der Erfindung zugrundliegenden Aufgabe erfolgt zum anderen durch den im Anspruch 7 beschriebenen Kolben. Demzufolge weist der erfindungsgemäße Kolben zumindest bereichsweise eine verglichen mit anderen Bereichen feinere Struktur sowie Partikel auf, die kleiner als 10⁻⁶ m sind. Diese Partikel führen zu der gewünschten Dispersionshärtung und damit zu der deutlichen Verbesserung der Hochtemperaturfestigkeit.

Ferner besteht der Kolben aus einer Legierung mit einem Hauptlegierungselement und zumindest einem Legierungselement. Vorteilhaft weist der Kolben aufgrund des Umschmelzens zumindest bereichsweise eine verglichen mit anderen Bereichen feinere Struktur und eine erhöhte Konzentration des Hauptlegierungselements auf. Wie vorangehend ausgeführt wurde, ist ein Bereich mit einer wesentlich feineren Mikrostruktur beständiger gegen die Einleitung von thermomechanischen Rissen. Ferner ergibt sich, dass die Erhöhung der Konzentration des Hauptlegierungselements zwar die Festigkeit bereichsweise zumindest geringfügig beeinträchtigen kann. Im Rahmen der Erfindung hat sich jedoch herausgestellt, dass dies gleichzeitig zu einer vorteilhaften Erhöhung der Beständigkeit gegen thermische Ermüdung führt. Die bevorzugten Ausführungsformen des erfindungsgemäßen Kolbens entsprechen im Wesentlichen denjenigen Ausführungsformen, die sich durch die vorangehend geschilderten Varianten des erfindungsgemäßen Verfahrens ergeben.

### Kurze Beschreibung der Zeichnungen

Nachfolgend werden eine beispielhaft in den Zeichnungen dargestellte Ausführungsform des erfindungsgemäßen Kolbens sowie das hierbei verwendete Verfahren näher erläutert. Es zeigen:
- Fig. 1: einen Querschnitt durch einen vorbearbeiteten und erfindungsgemäß zu bearbeiteten Kolben;
- Fig. 2: die erfindungsgemäße Bearbeitung des Kolbens; und
- Fig. 3: den erfindungsgemäß fertig bearbeiteten Kolben.

### Ausführliche Beschreibung der Erfindung

In Fig. 1 ist ein vorbearbeiteter Kolben 10 gezeigt, der an seinem Kolbenboden eine Mulde 12 aufweist. Der Rand 14 dieser Mulde ist während des Betriebs unter thermischen Gesichtspunkten besonders hoch belastet. Deshalb wird bei dem gezeigten Ausführungsbeispiel eine erfindungsgemäße Bearbeitung dieses Bereichs vorgenommen.

Wie in Fig. 2 schematisch gezeigt ist, wird durch ein geeignetes Schweißverfahren, bevorzugt Plasmaschweißen, durch eine hierfür geeignete Vorrichtung 16 ein Auf- oder Umschmelzen des Muldenrandes 14 bewirkt. Bevorzugt wird hierbei in Form eines Drahtes 18 als Zusatzwerkstoff das Hauptlegierungselement des Kolbens 10 eingeschweißt. Hierdurch erhöht sich in den bearbeiteten Bereichen die Konzentration des Hauptlegierungselements, während sich die Konzentration der festigkeitssteigernden, aber auch versprödenden Elemente verringert.

Fig. 3 zeigt einen Querschnitt durch den fertig bearbeiteten Kolben 20. Die mit 14 bezeichneten Muldenrandbereiche, die in der Figur dunkel angedeutet sind, weisen zum einen infolge des Umschmelzens eine feinere Mikrostruktur auf. Ferner wurde bei dem gezeigten Ausführungsbeispiel die Konzentration der Legierungselemente durch das Einbringen des Hauptlegierungselements verringert. Für beide Effekte hat sich herausgestellt, dass sie die thermische Beständigkeit des Kolbens in dem bearbeiteten Bereich erhöhen. Da bei dem gezeigten Kolben eine hohe Beanspruchung des .. Muldenrandbereichs 14 zu erwarten ist, ergibt sich hier eine verbesserte Beständigkeit und insgesamt eine längere Standzeit des Kolbens.

## Patentansprüche

1. Verfahren zur Herstellung eines Kolbens (20), für Brennkraftmaschinen, der aus einer Legierung mit einem Hauptlegierungselement und zumindest einem Legierungselement besteht, und bei dem zumindest der Muldenrand (14) des Kolbens (10) einer Schmelzbehandlung unterzogen wird, **dadurch gekennzeichnet, dass** die Schmelzbehandlung durch ein Lichtbogen-Schweißverfahren erfolgt und dass nach der Schmelzbehandlung eine Abkühlung mit einer Geschwindigkeit von 100-1000 K/s erfolgt, und dass bei dem Schweißverfahren das Hauptlegierungselement als Zusatzwerkstoff eingebracht wird,
sodass die Konzentration des Hauptlegierungselements zumindest bereichsweise erhöht wird.

2. Verfahren nach Anspruch 1,
**dadurch gekennzeichnet, dass**
als Schweißverfahren Plasma- oder MIG-Schweißen verwendet wird.

3. Verfahren nach Anspruch 1,
**dadurch gekennzeichnet, dass**
als Schweißverfahren WIG-Schweißen verwendet wird.

4. Verfahren nach zumindest einem der vorangehenden Ansprüche,
**dadurch gekennzeichnet, dass**
das Schweißverfahren mit mehr als einer Lage und/oder mehr als einer Bahn durchgeführt wird.

5. Verfahren nach zumindest einem der vorangehenden Ansprüche,
**dadurch gekennzeichnet, dass**
das Hauptlegierungselement Aluminium oder Eisen ist.

6. Verfahren nach zumindest einem der vorangehenden Ansprüche,
**dadurch gekennzeichnet, dass**
in dem behandelten Bereich des Kolbens (10) bis zu 50% Zusatzwerkstoff eingebracht wird.

7. Kolben (20)der aus einer Legierung mit einem Hauptlegierungselement und zumindest einem Legierungselement besteht, und bei dem zumindest der Bereich des Muldenrandes (14) eine verglichen mit anderen Bereichen feinere Struktur aufweist,
**dadurch gekennzeichnet, dass**
in dem Bereich mit einer feineren Struktur Partikel vorhanden sind, die kleiner als 10⁻⁶ m sind, und dass zumindest in dem Bereich mit einer feineren Struktur eine erhöhte Konzentration des Hauptlegierungselements vorliegt.

8. Kolben nach Anspruch 7,
**dadurch gekennzeichnet, dass**
das Hauptlegierungselement Aluminium oder Eisen ist.

## Claims

1. Method for producing a piston (20) for internal combustion engines which consists of an alloy having a main alloying element and at least one alloying element, and in which at least the edge (14) of the depression of the piston (10) is subjected to a melting treatment, **characterised in that** the melting treatment takes place by an arc welding method and **in that** after the melting treatment, cooling takes place at a rate of 100-1,000 K/s, and **in that** in the welding method, the main alloying element is introduced as an auxiliary material so that the concentration of the main alloying element is increased at least in some regions.

2. Method according to claim 1, **characterised in that** plasma welding or MIG welding is used as the welding method.

3. Method according to claim 1, **characterised in that** TIG welding is used as the welding method.

4. Method according to at least one of the preceding claims, **characterised in that** the welding method is carried out with more than one layer and/or more than one strip.

5. Method according to at least one of the preceding claims, **characterised in that** the main alloying element is aluminium or iron.

6. Method according to at least one of the preceding claims, **characterised in that** in the treated region of the piston (10) up to 50% auxiliary material is introduced.

7. Piston (20) which consists of an alloy having a main alloying element and at least one alloying element, and in which at least the region of the edge (14) of the depression has a structure which is finer compared to other regions, **characterised in that** in the region with a finer structure there are particles which are smaller than 10⁻⁶ m, and **in that** at least in the region with a finer structure there is an increased concentration of the main alloying element.

8. Piston according to claim 7, **characterised in that** the main alloying element is aluminium or iron.

## Revendications

1. Procédé de fabrication d'un piston (20) pour des moteurs à combustion interne, composé d'un alliage ayant un élément d'alliage principal et au moins un élément d'alliage, et où au moins le bord de cavité (14) du piston (10) est soumis à un traitement par fusion, **caractérisé en ce que** le traitement par fusion se fait par un procédé de soudage à l'arc et **en ce que**, après le traitement à fusion, un refroidissement est effectué à une vitesse de 100 à 1000 K/s, et **en ce que**, lors du procédé par fusion, l'élément d'alliage principal est introduit en tant que matériau additif, de manière à augmenter au moins localement la concentration de l'élément d'alliage principal.

2. Procédé selon la revendication 1, **caractérisé en ce que** l'on utilise un soudage au plasma ou un soudage MIG comme procédé de soudage.

3. Procédé selon la revendication 1, **caractérisé en ce que** l'on utilise un soudage WIG comme procédé de soudage.

4. Procédé selon au moins l'une des revendications précédentes, **caractérisé en ce que** le procédé de soudage est effectué avec plus d'une couche et/ou plus d'une bande.

5. Procédé selon au moins l'une des revendications précédentes, **caractérisé en ce que** l'élément d'alliage principal est l'aluminium ou le fer.

6. Procédé selon au moins l'une des revendications précédentes, **caractérisé en ce que** jusqu'à 50 % de matériau additif sont introduits dans la zone traitée du piston (10).

7. Piston (20) composé d'un alliage comprenant un élément d'alliage principal et au moins un élément d'alliage, et où au moins la zone du bord de cavité (14) présente une structure plus fine en comparaison des autres zones, **caractérisé en ce que**, dans la zone à structure plus fine, se trouvent des particules inférieures à 10⁻⁶ m, et **en ce que**, au moins dans la zone à structure plus fine, se trouve une concentration accrue de l'élément d'alliage principal.

8. Piston selon la revendication 7, **caractérisé en ce que** l'élément d'alliage principal est l'aluminium ou le fer.
